Europäisches Patentamt

European Patent Office

Office européen des brevets

(19)

(11) Veröffentlichungsnummer: **0 237 604**
**B1**

(12) **EUROPÄISCHE PATENTSCHRIFT**

(45) Veröffentlichungstag der Patentschrift:
24.01.90

(51) Int. Cl.⁴: **C03B 5/04**

(21) Anmeldenummer: **86103818.0**

(22) Anmeldetag: **20.03.86**

(54) Energiesparendes Verfahren zum Schmelzen von Glas.

(43) Veröffentlichungstag der Anmeldung:
**23.09.87 Patentblatt 87/39**

(45) Bekanntmachung des Hinweises auf die Patenterteilung:
**24.01.90 Patentblatt 90/4**

(84) Benannte Vertragsstaaten:
**AT BE CH DE FR GB IT LI LU NL SE**

(56) Entgegenhaltungen:
EP-A- 0 086 858
DE-C- 806 998
FR-A- 743 978
FR-A- 2 348 161
GB-A- 325 238
GB-A- 1 116 894
US-A- 2 254 079
US-A- 2 616 221
US-A- 3 261 677

(73) Patentinhaber: **Sorg GmbH & Co. KG, Im
Aller 23 Postfach 520, D-8770 Lohr/Main(DE)**

(72) Erfinder: **Pieper, Helmut, Buchenstrasse 19,
D-8770 Lohr/Main(DE)**

(74) Vertreter: **Patentanwälte Schulze Horn und Hoffmeister,
Goldstrasse 36, D-4400 Münster(DE)**

## Beschreibung

Die Erfindung betrifft ein energiesparendes Verfahren zum Schmelzen von Glas in einem Glasschmelzofen, in dem das Gemenge in einem Schmelzteil aufgeschmolzen, in einem an das Schmelzteil anschließenden Läuterteil geläutert, danach in einem daran anschließenden Homogenisierungsteil erhöhter Badtiefe homogenisiert und daraus abgezogen wird, wobei das Gemenge am Anfang des Schmelzteils aufgegeben wird, unter der Gemengeaufgabe Energie durch Elektroden zugeführt wird, und auch Schmelzenergiezuführung durch Brenner fossilen Brennstoffs stattfindet, wobei die Rauchgase nahe der Gemengeaufgabe abgezogen werden, sowie einen Glasschmelzofen zur Durchführung dieses Verfahrens mit einem Schmelzteil, einem Homogenisierungsteil erhöhter Badtiefe und einem dazwischen angeordnetem Läuterteil, mit Elektroden zur Zuführung elektrischer Energie im Gemengeaufgabeteil im Bereich der Gemengeaufgabe und mit Brenner (20) zur Zuführung fossiler Energie, wobei der Abzug der Brenngase und die Gemengeeingabe am Anfang des Schmelzteils erfolgt.

Glasschmelzöfen haben allgemein, obwohl sie mit Rekuperatoren oder Regeneratoren arbeiten, den Nachteil eines relativ geringen Wirkungsgrades. Dies liegt nicht an der mangelnden Isolation der Glaswannen, sondern daran, daß die Abgaswärme die zur Vorheizung der Verbrennungsluft benötigte Wärmeenergie erheblich übersteigt. Einer Erhöhung der Temperatur der Verbrennungsluft sind dabei Grenzen gesetzt, da dadurch der Wärmeaustausch sehr aufwendig wird, insbesondere aber nachteilig die Konzentration des giftigen $NO_x$ stark steigt.

Um den Wärmeüberschuß im Abgas sinnvoll zu nutzen, hat es bereits verschiedene Versuche gegeben, auch das Gemenge vor dem Einbringen in die Glasschmelzwanne vorzuheizen. Diese Versuche waren aber erfolglos, da durch die Aufheizung bereits ein Vorschmelzen von einigen Gemengebestandteilen auftreten kann, wodurch die Wärmeaustauschflächen verkleben und zum anderen bei direktem Kontakt des Abgases mit dem Gemenge neben dem Vorschmelzen bestimmter Bestandteile auch noch ein Entmischen auftritt bzw. bestimmte Gemengebestandteile mitgenommen werden, wodurch der Staubgehalt im Abgas unzulässig erhöht wird bzw. sehr aufwendige Staubfilter erforderlich werden.

Aus der EP-A 0 086 858 ist bereits ein Ofen der eingangs genannten Art bekannt, in dem auch das eingangs genannte Verfahren durchgeführt wird. Nachteilig ist bei diesem bekannten Ofen, daß eine Oberflächenströmung im Schmelzteil von der Gemengeaufgabe zum Läuterteil hin vorhanden ist. Dadurch besteht die Gefahr, daß noch nicht aufgeschmolzenes Gemenge in den Läuterteil gelangt und dort eine Verschlechterung der Glasqualität bewirken kann.

Es ist demgegenüber Aufgabe der Erfindung, ein Verfahren zum Schmelzen von Glas und einen Glasschmelzofen zu schaffen, denen die genannten Nachteile nicht mehr anhaften, wobei der verwendete Ofen gegenüber bekannten Öfen einen erheblich verbesserten Wirkungsgrad aufweisen soll, gleichwohl aber wirtschaftlich zu erstellen ist und bei dem insbesondere geringere $NO_x$-Konzentrationen sowie ein geringerer Staubgehalt im Abgas vorliegt, ohne daß schwierig zu beherrschende, eine hohe Temperatur aufweisende Bauteile im Ofen oder für den Wärmetausch notwendig werden.

Die Oberofentemperaturen und die Temperaturen in den verwendeten Wärmetauschern (Rekuperatoren) sollen sogar geringer als bei den üblichen, bekannten Öfen sein.

Über die genannten Vorteile hinaus soll der erfindungsgemäße Ofen wirtschaftlich herstellbar und betriebssicher zu fahren sein, wobei im Bedarfsfall ein weitgehender Austausch von fossiler und elektrischer Energie möglich sein soll.

Diese Aufgabe wird verfahrensmäßig erfindungsgemäß dadurch gelöst, daß die Schmelzenergiezuführung durch Brenner fossilen Brennstoffs im Läuterteil erfolgt, die Rauchgase den Schmelzteil im Gegenstrom zu dem Gemenge überstreichen und das Schmelzteil an der Oberfläche durch eine aus dem Läuterteil kommende Strömung im Gegenstrom zu dem Gemenge durchströmt wrid.

Vorrichtungsmäßig erfolgt die Lösung der erfindungsgemäßen Aufgabe bei dem eingangs genannten Ofen derart, daß (im Läuterteil) die Brenner zur Zuführung fossiler Energie angeordnet sind und zur Ausbildung der heißen Oberflächen-Strömung als Gegenstrom zur Gemengebewegung der Schmelzteil-Boden vom Läuterteil zur Gemengeeingabe hin abfällt, wobei die Decke des Ofens zwischen dem Brennerteil und dem Gemengeaufgabeteil mindestens einen sich bis kurz über die Badoberfläche erstreckenden Strahlungsschutzwall aufweist.

Vorteilhaft zur Einstellung der erforderlichen Glasströmungen kann der Abfall im Schmelzteil stetig erfolgen, wobei der Boden des Läuterteils eben ist und zur Einstellung geringster Temperaturdifferenzen zwischen Boden und Badoberflächen im Läuterteil können im Boden des Läuterteils "bubbler" eingebaut sein.

Um ausreichend Oberfläche zum Wärmeaustausch zwischen den Rauchgasen und dem Gemenge zu haben, kann vorteilhaft die Länge des Schmelzteils zwischen drei- und fünfmal so groß sein wie die des Läuterteils.

Vorteilhaft bewirken weiterhin die unter der Gemengeaufgabe angeordneten Elektroden, daß sich neben ihnen zum Läuterteil hin eine absteigende Strömung bildet, die den Heißglasstrom im Schmelzteil nach unten umlenkt, wodurch die am Boden verlaufende Rückströmung zum Läuterteil hin verstärkt wrid.

Vorteilhaft zur ausreichenden Gemengevorwärmung kann der Schmelzteil drei bis fünfmal die Länge des Läuterteils aufweisen und um eine den Wirkungsgrad herabsetzende Wärmeübertragung durch Strahlung aus dem Brennerteil zu vermeiden, können vorteilhaft zwischen Läuter- und Schmelzteil und in dem Schmelzteil Strahlungsschutzwälle vorhanden sein.

Der besondere Vorteil des erfindungsgemäßen Verfahrens und Glasschmelzofens besteht darin, daß die Abgase unter Vorwärung des auf dem Glasbad aufliegenden Gemenges bis zum Austritt aus dem Wannenraum auf 800–1000°C abgekühlt werden und ohne größeren technischen Aufwand die Rekuperatoren dabei die Luft im Gegenstrom auf ca. 700°C aufheizen können.

Ersichtlicherweise vermag der erfindungsgemäße Glasschmelzofen in Verbindung mit dem Verfahren zu seinem Betrieb die anstehenden Probleme in besonders vorteilhafter Weise und erstmalig zu lösen. Das erfindungsgemäße Prinzip besteht dabei, das Gemenge auf das Glasbad aufzubringen und dort durch das Abgas vorzuwärmen und dabei das Abgas soweit abzukühlen, daß die verbliebene Energie fast vollständig zur Aufheizung der· Verbrennungsluft verwendet werden kann. Das Flüssigbleiben des Glases und die Einstellung eines optimalen Strömungsfeldes in dem Gemenge-Vorwärmebereich der Wanne wird dabei durch die Zugabe von vergleichsweise geringen Mengen elektrischer Energie gewährleistet.

Im folgenden wird ein Ausführungsbeispiel der Erfindung anhand einer Zeichnung näher erläutert. Diese zeigt einen Längsschnitt durch eine Glaswanne gemäß der Erfindung.

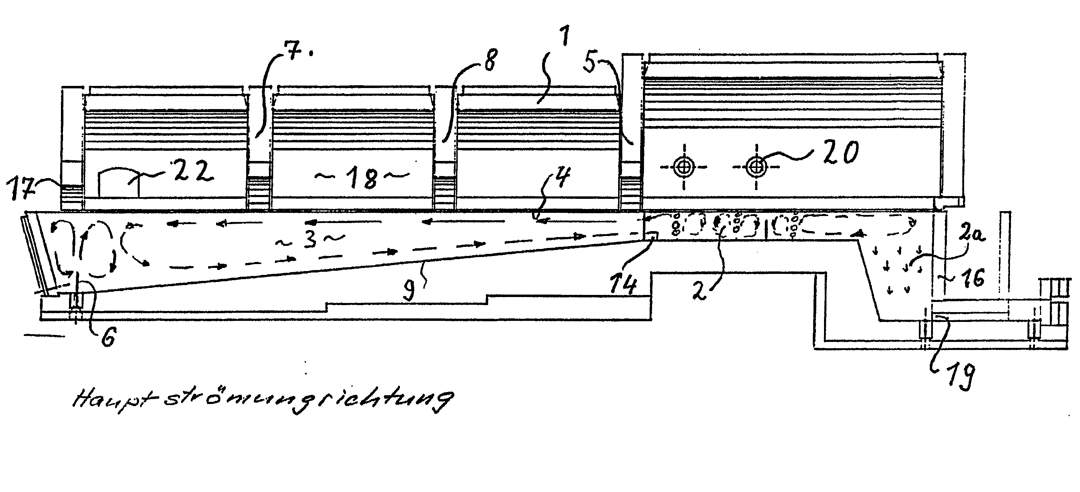

Gemäß der Figur besteht der erfindungsgemäße Glasschmelzofen aus einer länglichen, rechtechigen Wanne mit einem Läuterteil 2 und einem Schmelzteil 3, die ineinander übergehen und wobei der Schmelzteil 3 eine Längeaufweist, die ca. 3 bis 5 mal so groß ist wie die des Läuterteils 2. Als Brennerteil 2 wird derjenige flache Wannenteil bezeichnet, in welchem die Brenner 20 angeordnet sind, die zur Verfeuerung von Öl oder Gas dienen.

Die Wanne weist weiterhin brennerseitig eine Querwand 16, gemengeaufgabeseitig eine Querwand 17 und Längswände 18 auf. Der Oberofen wird von einer Decke 1 gebildet. Der Wannenboden ist mit 9 bezeichnet.

Im Gemengeaufgabeteil 3 sind Bodenelektroden 6 angeordnet, die ein Einfrieren des Glasbades in diesem Bereich, insbesondere im direkten Bereich der Gemengeauflage verhindern. Das Einfrieren wird weiterhin dadurch verhindert, daß innerhalb des Schmelzteils 3 eine Oberflächenströmung eingestellt wird, die laufend hocherhitztes Glas aus dem von den Brennern 20 hocherhitzten Läuterbereich 2 in den Bereich der Gemengeaufgabe befördert.

Die Gemengeaufgabe erfolgt in herkömmlicher Weise auf der ganzen Breite der Querwand 17.

Im einzelnen ist die Wanne entsprechend herkömmlicher Technik aufgebaut, wie sie auch in älteren Anmeldungen der Anmelderin beschrieben wird, so daß auf eine weitergehende Beschreibung verzichtet werden kann. Diese gilt insbesondere für die Gestaltung der Wandungen, des Gewölbes, des Bodens, der Brenner, der Elektroden sowie des Auslaßes 19 am gemengeaufgabenfernen Ende des Homogenisierungsteils 2 a und für die Gestaltung der Abgasabzugsöffnungen 22 direkt neben der Gemengeaufgabe.

Im Wanneninneren ist am aufgabeseitigen Ende des Läuterteils 2 ein Strahlungsschutzwall 5 angeordnet, der von der Decke bis dicht über die Badoberfläche 4 reicht und verhindert, daß Strahlung in den Schmelzteil 3 gelangt. Wie bekannt, wird bei hohen Kammertemperaturen der größte Teile der Energie durch Strahlung übertragen und es ist daher erfindungswesentlich, die durch die Brenner 20 zugeführte Energie im Läuterteil 2 zu konzentrieren.

Da weitere beträchtliche Strahlungsmengen von der Badoberfläche und insbesondere von dem Schutzwall 5 zur Aufgabeseite hin wirksam sind, weist der Schmelzteil 3 noch einen weiteren Strahlungsschutzwall 7 in der Nähe der Gemengeaufgabe und zwischen den Schutzwällen 5 und 7 einen weiteren Schutzwall 8 auf. Durch diese Anordnung wird sicher verhindert, daß nennenswert Strahlungsenergie zur Gemengeaufheizung dient, sondern diese soll praktisch ausschließlich durch das Abgas erfolgen, welches aus dem Läuterteil 2 durch das Schmelzteil 3 zu den Abgasaustrittsöffnungen 22 strömt.

Fakultativ kann der Boden 9 am aufgabeseitigen Ende des Läuterteils 2 eine Schwelle 14 aufweisen, die ein Strömungsbild einstellt, in welchem Heißglas an der Badoberfläche zurück zur Gemengeauflage strömt und dort in Verbindung mit den Bodenelektoden 6 ein Einfrieren des Glases verhindert.

Das auf ca. 900° C abgekühlte Abgas wird nach Austritt aus der Wanne Rekuperatoren zugeführt, aus welchen es mit einer Temperatur von ca. 150 - 250° C austritt. Bei dieser Temperatur ist die dem Abgas innewohnende Energie weitgehend auf die Verbrennungsluft übergegangen.

In den Rekuperatoren wird durch das abkühlende Abgas die Verbrennungsluft von Normaltemperature auf eine Temperatur von ca. 700° C vorgewärmt und dann über Rohrleitungen den Brennen 20 zugeführt. Die aufgrund der relativ geringen Lufttemperaturen erfolgende Verbrennung weist den Vorteil auf, daß die Flammtemperatur relativ niedrig sind und daher höhere Konzentrationen von $NO_x$ nicht auftreten können. Das Abgas ist als nicht nur weit abgekühlt, sondern weist auch äußerst geringe Konzentrationen von $NO_x$ auf, so daß ein Betrieb des erfindungsgemäßen Glasschmelzofens auch in Gebieten mit geringen Emissionswerten, z. B. in Städten, möglich ist, zumal der Einsatz eines Staubfilters aufgrund der geringen Abgastemperaturen leicht möglich ist.

Vom Betrieb der Wanne her ist es wichtig, daß das Schmelzteil 3 in seinem aufgabeseitigem Ende ausschließlich zur Gemengevorwärmung dient und ein wesentliches Einschmelzen des Gemenges erst am brennerseitigen Ende des Schmelzteils 3 erfolgt, wobei dann im Läuterteil 2 ein Läutern des Glases stattfindet, bevor dieses durch einen Bodenauslaß 19 in bekannter Weise abgezogen wird.

Im Läuterteil 2 sind ein Anzahl von "bubblern" angeordnet, die Luft durch den Boden einleiten können. Durch diese Luft wird - gegebenenfalls unter Mithilfe von Bodenelektroden - eine starke Umwälzung des Glases im Läuterteil 2 erreicht, so daß sich innerhalb des Läuterteils von oben nach unten nur ein sehr geringer Temperaturgradient einstellen kann. Dadurch wird sichergestellt, daß die Badoberfläche Temperaturen von etwa 1500°C erreicht, wobei die Gewölbetemperatur des Gewölbes über dem Läuterteil 2 Temperaturen von 1550° C nicht überschrietet. Die Temperaturen im Schmelzteil 3 sind demgegenüber erheblich geringer, sie betragen von der Gemengeaufgabe zum Läuterteil 2 hin 900 bis 1300°C.

Im Homogenisierungsteil 2 a erfolgt die Homogenisierung des Glases unter Abkühlung, so daß sich eine optimale Temperaturschichtung einstellt, die umlaufende Strömungen und damit das Einbringen von blasigem und inhomogenem Glas in den Auslaß verhindert.

Durch die Strahlungsschutzwälle 5, 7 und 8 wird eine Gasgeschwindigkeit über dem Gemenge von ca. 10 - 15 m/s eingestellt, die neben der Strahlungswärmeübertragung auch noch eine gewisse konvektive Wärmeübertragung erlaubt. Die Stahlungsschutzwälle sind dabei z. B. entsprechend scheidtrechten Bögen wie bei großen Doghausbögen aufgebaut.

Die zugeführte elektrische Energie kann weiterhin derartig im Verhältnis zu der durch die Brenner zugeführten Energie gewählt werden, daß der NO$_x$-Massenstrom die zulässigen Werte nicht überschreitet. Bei höherem Anteil der elektrischen Energie sinkt dabei der NO$_x$-Massenstrom und steigt bei Verringerung des Anteils an.

Der erfindungsgemäße Glasschmelzofen kann wirtschaftlich hergestellt werden, da im Gemengeaufgabeteil aufgrund der geringeren Temperaturen kostengünstiges Feuerfestmaterial eingesetzt werden kann.

. Es liegt im Wesen der Erfindung, daß der gesamte Glasschmelzofen, die Leitungen für das Abgas und für die erwärmte Verbrennungsluft stark isoliert werden. Trotzdem ist es für den Fachmann überraschend, daß der spezifische Energieverbrauch auf den bisher unerreichten Wert von 3100 - 3400 kjoule/kg Glas verringert werden kann.

**Patentansprüche**

1. Energiesparendes Verfahren zum Schmelzen von Glas in einem Glasschmelzofen, in dem das Gemenge in einem Schmelzteil (30) aufgeschmolzen, in einem an das Schmelzteil (3) anschließenden Läuterteil (2) geläutert, danach in einem daran anschließenden Homogenisierungsteil (2a) erhöhter Badtiefe homogenisiert und daraus abgezogen wird, wobei das Gemenge am Anfang des Schmelzteils (3) aufgegeben wird, unter der Gemengeaufgabe Energie durch Elektroden (6) zugeführt wird, und auch Schmelzenergiezuführung durch Brenner (20) fossilen Brennstoffs stattfindet, wobei die Rauchgase nahe der Gemengeaufgabe abgezogen werden, dadurch gekennzeichnet, daß die Schmelzenergiezuführung durch Brenner (20) fossilen Brennstoffs im Läuterteil erfolgt, die Rauchgase den Schmelzteil (3) im Gegenstrom zu dem Gemenge überstreichen und das Schmelzteil an der Oberfläche durch eine aus dem Läuterteil (2) kommende Strömung im Gegenstrom zu dem Gemenge durchströmt wird.

2. Energiesparendes Verfahren nach Anspruch 1, dadurch gekennzeichnet, daß die unter der Gemengeaufgabe angeordneten Elektroden (6) zum Schmelzteil (3) hin eine absteigende Strömung bilden, die den Heißglasstrom im Schmelzteil nach unten umlenkt und so eine am Boden (9) verlaufende Rückströmung zum Läuterteil (2) verstärkt.

3. Energiesparendes Verfahren nach Anspruch 1 oder 2, gekennzeichnet durch das Einblasen von Luft durch den Boden des Läuterteils (2).

4. Energiesparendes Verfahren nach Anspruch 1 oder 2, gekennzeichnet durch die Flammstrahlung aus dem Läuterteil (2) an dessen Grenze und über dem Schmelzteil (3) absorbierenden Maßnahmen (5, 7, 8).

5. Glasschmelzofen zur Durchführung des Verfahrens nach einem der Ansprüche 1 bis 4, mit einem Schmelzteil (3), einem Homogenisierungsteil (2a) erhöhter Badtiefe und einem dazwischen angeordneten Läuterteil (2), mit Elektroden (6) zur Zuführung elektrischer Energie im Gemengeaufgabeteil im Bereich der Gemengeaufgabe und mit Brenner (20) zur Zuführung fossiler Energie, wobei der Abzug der Brenngase und die Gemengeeingabe am Anfang des Schmelzteils erfolgt, dadurch gekennzeichnet, daß die Brenner (20) zur Zuführung fossiler Energie im Läuterteil (2) angeordnet sind und zur Ausbildung der heißen Oberflächen-Strömung als Gegenstrom zur Gemengebewegung der Schmelzteil-Boden (9) vom Läuterteil zur Gemengeeingabe hin abfällt, wobei die Decke (1) des Ofens zwischen dem Brennerteil (2) und dem Gemengeaufgabeteil (3) mindestens einen sich bis kurz über die Badoberfläche (4) erstreckenden Strahlungsschutzwall (5) aufweist.

6. Glasschmelzofen nach Anspruch 5, dadurch gekennzeichnet, daß der Abfall über die Länge des Schmelzteils (3) stetig erfolgt und der Boden des Läuterteils (2) eben ist.

7. Glasschmelzofen nach Anspruch 6, dadurch gekennzeichnet, daß im Boden (9) des Läuterteils (2) "bubbler" eingebaut sind.

8. Glasschmelzofen nach einem der Ansprüche 1 bis 7, dadurch gekennzeichnet, daß das Verhältnis der Länge des Läuterteils (2) zur Länge des Schmelzteils (3) zwischen 1 zu 3 und 1 zu 5 beträgt.

9. Glasschmelzofen nach einem der Ansprüche 1 bis 8, dadurch gekennzeichnet, daß der Wannenboden (9) unterhalb des ersten Strahlungsschutzwalls (5) eine Schwelle (14) aufweist.

**Claims**

1. Energy-saving process for melting glass in a glass furnace in which the glass batch is melted down in a melting section (3), refined in a refining section (2) adjoining the melting section (3), then homogenised in a homogenistation section (2a) having an increased bath depth and being adjacent to said refining section, and is withdrawn therefrom, the batch being charged at the start of the melting section (3), energy being supplied by electrodes (6) under the batch feed-in point, and also melting energy being supplied through fossil fuel burners (20), the waste gases being drawn off close to the batch feed-in point, characterised in that the melting energy is supplied by fossil fuel burners (20) in the refining section, the waste gases cross the melting section (3) in a counter-flow to the batch, and a flow coming from the refining section (2) flows through the melting section at the surface in a counterflow to the batch.

2. Energy-saving process according to Claim 1, characterised in that the electrodes (6) arranged beneath the batch feed-in point form a descending flow towards the melting section (3), which flow diverts the flow of hot glass in the melting section downwards, and thus intensifies a return flow to the refining section (2) which occurs at the base (9).

3. Energy-saving process according to Claim 1 or 2, characterised in that air is blown through the base of the refining section (2).

4. Energy-saving process according to Claim 1 or 2, characterised by measures (5, 7, 8) absorbing the radiation of flames from the refining section (2) at the boundary thereof and above the melting section (3).

5. Glass furnace for carrying out the process according to one of Claims 1 to 4, with a melting section (3), a homogenisation section (2a) having an increased bath depth and a refining section (2) located therebetween, with electrodes (6) for supplying electric power in the batch feed-in section in the region of the batch feed-in point and with burners (20) for supplying fossil energy, the fuel gases being drawn off and the batch being charged at the beginning of the melting section, characterised in that the burners (20) for supplying fossil energy are disposed in the refining section (2) and in order to form the hot surface flow as a counter-flow to the movement of the batch the base (9) of the melting section drops away from the refining section towards the batch feed-in point, the roof (1) of the furnace between the burner section (2) and the batch feed-in section (3) having at least one radiation protection wall (5) which extends until just above the surface (4) of the bath.

6. Glass furnace according to Claim 5, characterised in that the drop across the length of the melting section (3) occurs continuously and the base of the refining section (2) is level.

7. Glass furnace according to Claim 6, characterised in that "bubblers" are built into the base (9) of the refining section (2).

8. Glass furnace according to one of Claims 1 to 7, characterised in that the ratio of the length of the refining section (2) to the length of the melting section (3) is between 1 to 3 and 1 to 5.

9. Glass furnace according to one of Claims 1 to 8, characterised in that the base (9) of the tank has a sill (14) underneath the first radiation protection wall (5).

## Revendications

1. Procédé économe en énergie destiné à la fusion de verre dans un four de fusion de verre, dans lequel la fritte est fondue dans une partie de fusion (3), est affinée dans la partie d'affinage (2) communiquant avec la partie de fusion (3), puis est homogénéisée dans une partie communiquante d'homogénéisation (2a), de hauteur de bain accrue, et en est extraite, la fritte étant alimentée au début de la partie de fusion (3), de l'énergie étant amenée au moyen d'électrodes (6) sous l'alimentation en fritte et une amenée d'énergie de fusion étant en outre réalisée par des brûleurs (20) de combustible fossile, les gaz d'échappement étant extraits au voisinage de l'alimentation en fritte, caractérisé en ce que l'amenée d'énergie de fusion par les brûleurs (20) de combustible fossile se produit dans la partie d'affinage, que les gaz d'échappement passent au-dessus de la partie de fusion (3) à contre-courant de la fritte et que la partie de fusion (3) est parcourue en surface par un flux provenant de la partie d'affinage (2) à contre-courant vers la fritte.

2. Procédé économe en énergie selon la revendication 1, caractérisé en ce que les électrodes (6) disposées en-dessous de l'alimentation en fritte constituent un courant descendant vers la partie de fusion (3), courant qui dévie vers le bas le courant verre chaud dans la partie de fusion et qui reforce donc un courant de retour situé au fond (9) en direction de la partie d'affinage (2).

3. Procédé économe en énergie selon la revendication 1 ou 2, caractérisé par une insufflation d'air à travers le fond de la partie d'affinage (2).

4. Procédé économe en énergie selon les revendications 1 ou 2, caractérisé par des dispositions (5, 7, 8) absorbant le rayonnement de flamme hors de la partie d'affinage (2) sur la limite de celle-ci et au-dessus de la partie de fusion (3).

5. Four de fusion de verre destiné à la mise en œuvre du procédé selon l'une des revendications 1 à 4, comportant une partie de fusion (3), une partie d'homogénéisation (2a) de hauteur de bain accrue, et une partie d'affinage (2) disposée entre elles, avec des électrodes (6) pour amener une énergie électrique dans la partie d'alimentation en fritte dans la zone de l'alimentation en fritte et avec un brûleur (20) pour amener une énergie fossile, l'extraction des gaz de combustion et l'introduction de fritte se produisant au début de la partie de fusion, caractérisé en ce que les brûleurs (20) d'amenée d'énergie fossile sont disposés dans la partie d'affinage (2) et en ce que le fond (9) de la partie de fusion descend depuis la partie d'affinage vers l'alimentation en fritte pour créer le courant chaud de surface à contre-courant du déplacement de fritte, la voûte (1) du four entre la partie (2) de brûleur et la partie (3) d'alimentation en fritte présentant au moins un écran (5) de protection contre les rayonnements s'étendant jusqu'un peu au-dessus de la surface (4) du bain.

6. Four de fusion de verre selon la revendication 5, caractérisé en ce que la descente se produit constamment sur la longueur de la partie de fusion (3) et en ce que le fond de la partie d'affinage (2) est plan.

7. Four de fusion de verre selon la revendication 6, caractérisé en ce que des systèmes d'insufflation ou "bubbler" sont installés dans le fond (9) de la partie d'affinage (2).

8. Four de fusion de verre selon l'une des revendications 1 à 7, caractérisé en ce que le rapport entre la longueur de la partie d'affinage (2) et la longueur de la partie de fusion (3) est compris entre 1 à 3 et 1 à 5.

9. Four de fusion de verre selon l'une des revendications 1 à 8, caractérisé en ce que le fond de cuve (9) présente un seuil (14) au-dessous du premier écran protecteur (5) contre le rayonnement.